# FASCICULE DE BREVET EUROPEEN

(11) **EP 1 303 361 B1**
(45) Date de publication et mention de la délivrance du brevet: **04.05.2005**
(21) Numéro de dépôt: 01956633.0
(22) Date de dépôt: 23.07.2001
(51) Int. Cl.: B06B 1/04, H02K 29/06, H02K 7/06

(54) **VIBREUR POUR TELEPHONE PORTABLE**
VIBRATOR FÜR EIN MOBILTELEFON
PORTABLE TELEPHONE BUZZER

(30) Priorité: 26.07.2000 FR 0009781
(43) Date de publication de la demande: 23.04.2003
(73) Titulaire: Moving Magnet Technologies, 25000 Besançon (FR)
(72) Inventeur: GANDEL, Pierre, F-25660 Besançon (FR); ARLOT, Richard, F-25000 Besançon (FR)
(74) Mandataire: Breese, Pierre
(86) Numéro de dépôt international: PCT/FR2001/002397
(87) Numéro de publication internationale: WO 2002/007903

(56) Documents cités:
- FR-A- 2 686 747
- US-A- 3 860 300
- US-A- 3 959 673
- US-A- 5 373 207
- US-A- 5 877 568
- US-A- 5 973 426
- US-A- 6 049 149

## Description

La présente invention concerne le domaine des vibreurs destinés à générer des vibrations perceptibles par le corps humain. De tels dispositifs sont de plus en plus utilisés pour équiper des téléphones portables ou des équipements de messageries [Pager].

On connaît dans l'état de la technique différents types de vibreurs.

Le brevet FR2686747 décrit un moteur produisant un mouvement oscillant, ou rotatif vibratoire, et non pas tournant continûment. Il comporte un stator exerçant un couple variable sur une éprouvette de torsion. Ce moteur vibre donc à la fréquence propre de l'ensemble rotor-éprouvette de torsion. Ce document ne décrit pas un moteur tournant, et ne comporte pas de moyen de détection de position du rotor.

Le brevet américain US5373207 concerne un moteur de type « coreless» fonctionnant selon la loi de Laplace, c'est-à-dire par interaction des champs magnétiques avec le bobinage. Ce document ne décrit pas la caractéristique selon laquelle un moyen de détection commande au moins une bobine électrique.

Le brevet US3959673 décrit un moteur produisant un mouvement rotatif vibratoire, par l'exercice d'un couple sur une éprouvette de torsion.

On connaît aussi des structures de moteur non vibrant.

Les brevets américains US5973426 et US6049149 décrivent des moteurs triphasée, ne divulguant pas l'invention. Le brevet US5877568 décrit une forme de moteur électrique et non pas un vibreur.

Le brevet US3860300 décrit un palier magnétique.

Le but de l'invention est de proposer un vibreur présentant un bon rendement énergétique et un faible coût de fabrication. En particulier, le but est de proposer un dispositif acceptant une alimentation continue sans nécessiter un convertisseur ac/dc.

A cet effet, l'invention concerne dans son acception la plus générale un dispositif pour générer des vibrations perceptibles par le corps humain [notamment vibreur pour téléphone portable ou équipement portable de télécommunication], comprenant un moteur monophasé sans balai comportant un rotor présentant au moins un pôle magnétique, et un stator présentant au moins deux pôles alimentés en alternance par au moins une bobine électrique commandée par un moyen de détection de la position du rotor caractérisé en ce qu'il comprend un organe rotatif présentant un balourd, ledit organe rotatif balourdé étant entraîné par le moteur monophasé sans balai.

Selon une première variante préférée, le moyen de détection de la position du rotor est une sonde de Hall.

Selon une deuxième variante, le moyen de détection de la position du rotor est un détecteur de la tension induite dans une bobine électrique du stator.

Selon une troisième variante, le moyen de détection de la position du rotor est un détecteur optique.

De préférence, le rotor comprend un aimant annulaire aimanté radialement.

Selon un mode de réalisation particulier, le rotor comprend un aimant annulaire s'étendant sur moins de 270°.

Selon une variante préférée, le rotor comprend un aimant annulaire aimanté radialement présentant deux pôles magnétiques formés chacun par un aimant semi-annulaire s'étendant sur environ 180°.

Avantageusement, l'aimant annulaire est entouré par une culasse ferromagnétique annulaire présentant une hauteur inférieure à la hauteur de l'aimant, le moyen de détection de la position du rotor étant placé dans l'espace annulaire complémentaire.

Selon un premier mode de réalisation, le stator est formé par une pièce ferromagnétique de forme sensiblement discale, présentant un guide tabulaire pour le passage de l'arbre de rotation du rotor, ladite pièce présentant au moins une lumière pour le passage des bobines électriques.

Avantageusement, ladite pièce statorique présente deux lumières s'ouvrant chacun par une fente périphérique, pour délimiter une zone centrale entourant le guide tubulaire, destinée à recevoir deux bobines électriques.

Selon un deuxième mode de réalisation, ladite pièce statorique présente une lumière centrale fermée pour recevoir un noyau autour duquel sont bobinées deux bobines électriques.

Avantageusement, le rotor est positionné axialement par sustentation magnétique.

La présente invention sera mieux comprise à la lecture de la description d'un exemple non limitatif de réalisation qui suit, ce référant aux dessins annexés où :
- la figure 1 représente une vue éclatée d'un dispositif selon une première variante de réalisation ;

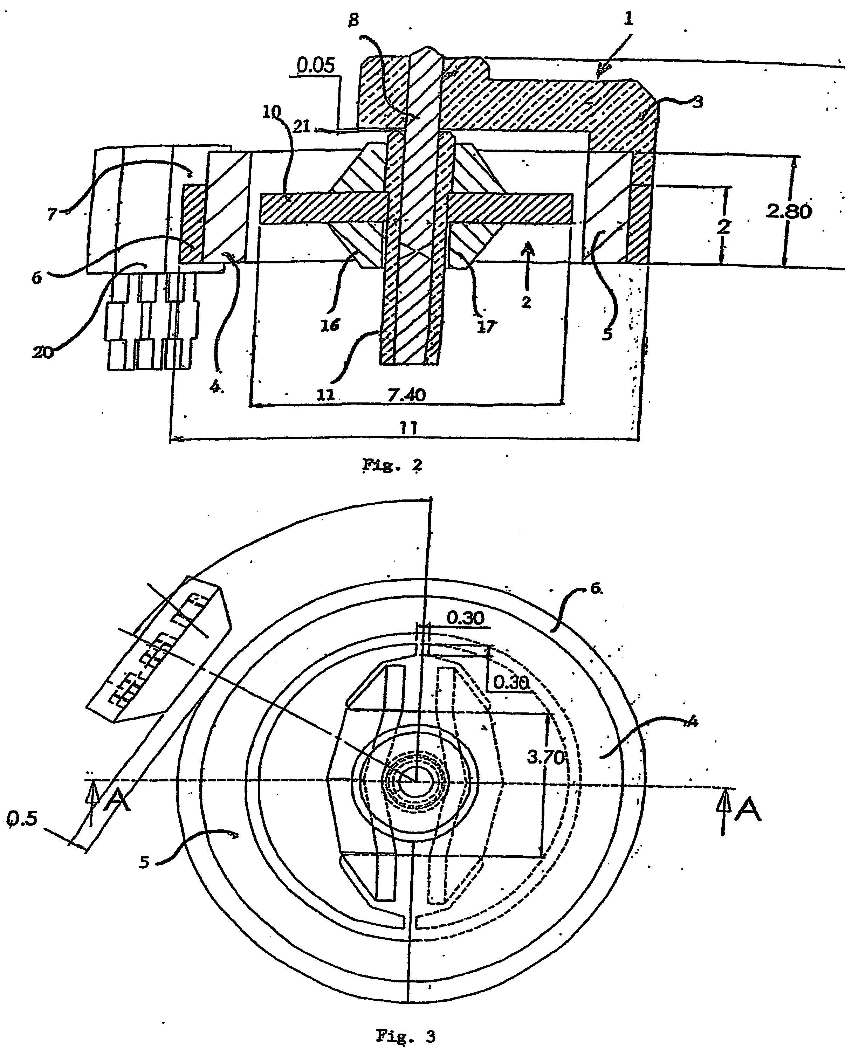

- la figure 2 représente une vue en coupe axiale du dispositif ;
- la figure 3 représente une vue en coupe transversale du dispositif ;
- la figure 4 représente une vue éclatée d'un dispositif selon une deuxième variante de réalisation.

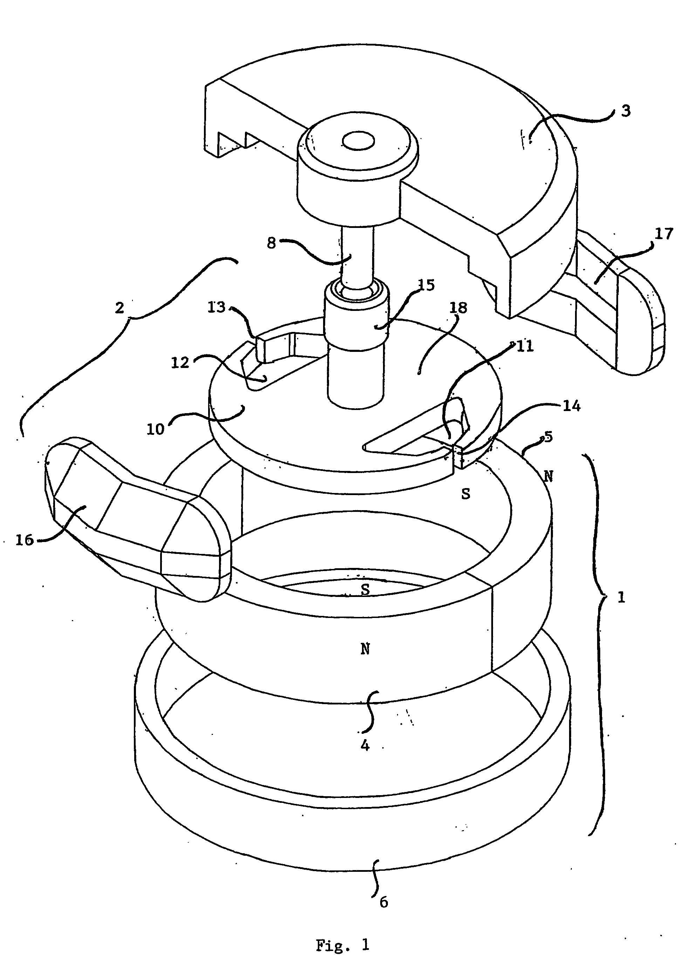

Le dispositif représenté en figure 1 est constitué par un stator (2) et une structure rotorique comprenant un rotor (1) et un balourd (3).

Le rotor (1) comprend deux aimants (4, 5) en forme de secteurs annulaires formant chacun un pôle magnétique s'étendant sur 180°, aimanté radialement de façon alternée.

On pourrait aussi prévoir un rotor comportant plus de deux aimants, ou encore un seul aimant, et en particulier un aimant s'étendant sur un segment annulaire seulement, et constituant dans ce cas un balourd en lui-même.

Ces aimants (4, 5) sont entourés par une culasse (6) en fer pur formant une enveloppe tubulaire. Cette culasse (6) présente une forme annulaire. Sa hauteur est inférieure à la hauteur des aimants (4, 5) afin de préserver un espace annulaire (7) permettant dans l'exemple décrit la détection de la variation de flux.

Le rotor (1) est solidaire du balourd (3) formé par une pièce en laiton ou en un matériau de lestage s'étendant sur 180° environ, et de préférence sur un secteur angulaire compris entre 180° et 270°. Un secteur angulaire de plus de 180° permet d'assurer un meilleur guidage du rotor par rapport au stator. Ce balourd (3) est solidaire d'un arbre (8).

Le stator comprend une culasse (10) en fer-nickel de forme sensiblement discale, placée à l'intérieur du rotor (1). Elle présente deux lumières (11, 12) symétriques par rapport à un plan diamétral.

Cette pièce (10) est prolongée par guide tubulaire (15) recevant l'arbre (8) du rotor.

Les bobines (16, 17) sont bobinées autour de la zone diamétrale (18) formant le noyau, grâce aux fentes périphériques (13, 14).

La hauteur du guide tubulaire (15) est déterminée de façon à ce que le rotor (1) viennent se positionner en sustentation magnétique par rapport au stator (2). Elle est déterminée de façon à laisser subsister un léger jeu (21) lorsque la pièce statorique (10) est centrée par rapport aux aimants (4, 5).

La transition entre les aimants (4, 5) est détectée par une sonde de Hall (20) détectant la variation de champs magnétique grâce à la fuite annulaire (7). Cette sonde est une sonde de type MELEXIS US79 (nom commercial) présentant deux sorties dont le niveau est fonction du champ détecté respectivement dans un sens et dans l'autre.

L'une des sorties de la sonde de Hall (20) alimente l'une des bobines (16), et l'autre sortie alimente l'autre bobine (17).

Le dispositif est alimenté en courant continu, la sonde de Hall assurant l'autocommutation des bobines et donc le fonctionnement du moteur sans qu'il ne soit nécessaire de recourir à un système de balais ou à une alimentation alternative.

Le rotor tourne continûment, pour réaliser des révolutions complètes, contrairement à des vibreurs de l'art antérieur où le rotor produisant un mouvement oscillatoire rotatif de faible amplitude angulaire, par l'action d'un couple variable sur un organe, de torsion.

A titre d'exemple, le rotor tourne à une vitesse de 100 à 200 tours par secondes et pèse environ 1,5 grammes.

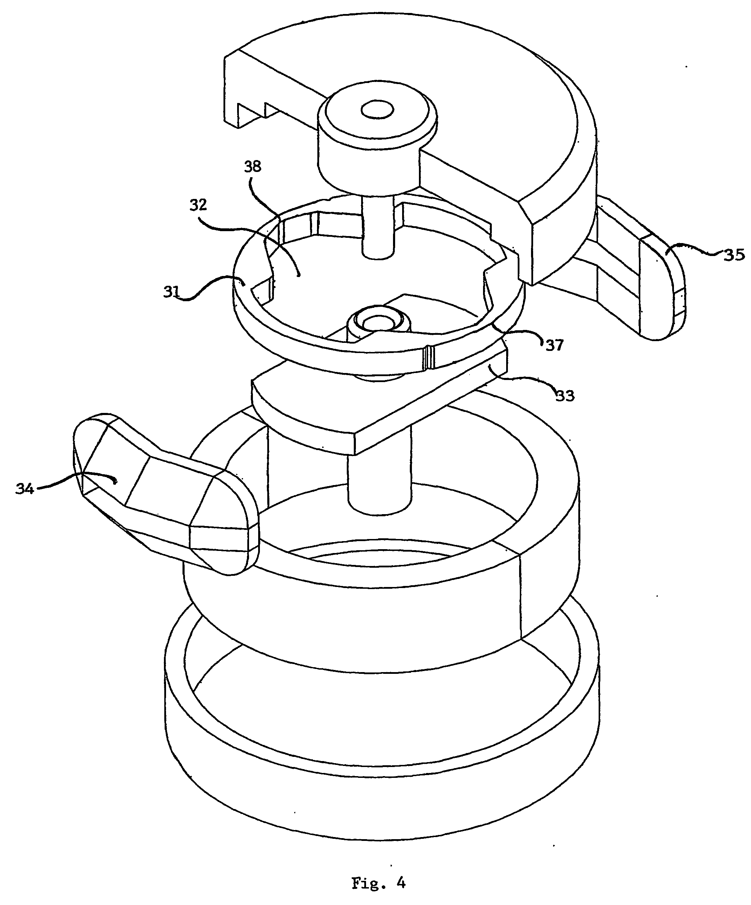

La figure 4 représente une variante de réalisation où le stator présente une lumière fermée (32) dans laquelle vient se loger un noyau ferromagnétique (33). Ce noyau est préalablement bobiné avec deux bobines (34, 35). Le stator présente des isthmes saturables (37, 38).

## Revendications

1. Dispositif pour générer des vibrations perceptibles par le corps humain, notamment vibreur pour téléphone portable ou équipement portable de télécommunication, comprenant un moteur monophasé sans balai comportant un rotor (1) présentant au moins un pôle magnétique, et un stator (2) présentant au moins deux pôles alimentés en alternance par au moins une bobine (16, 17) électrique, **caractérisé en ce que** ladite bobine est commandée par un moyen de détection de la position du rotor et **en ce que** ledit dispositif comprend un organe rotatif présentant un balourd, ledit organe rotatif balourdé étant entraîné par le moteur monophasé sans balai.

2. Dispositif pour générer des vibrations perceptibles par le corps humain selon la revendication 1, **caractérisé en ce que** le moyen de détection de la position du rotor (1) est une sonde de Hall (20).

3. Dispositif pour générer des vibrations perceptibles par le corps humain selon la revendication 1, **caractérisé en ce que** le moyen de détection de la position du rotor (1) est un détecteur de la tension induite dans une bobine (16, 17) électrique du stator.

4. Dispositif pour générer des vibrations perceptibles par le corps humain selon la revendication 1, **caractérisé en ce que** le moyen de détection de la position du rotor (1) est un détecteur optique.

5. Dispositif pour générer des vibrations perceptibles par le corps humain selon l'une quelconque des revendications précédentes, **caractérisé en ce que** le rotor (1) comprend un aimant annulaire (4, 5) aimanté radialement.

6. Dispositif pour générer des vibrations perceptibles par le corps humain selon la revendication 5, **caractérisé en ce que** le rotor (1) comprend un aimant annulaire s'étendant sur moins de 270°.

7. Dispositif pour générer des vibrations perceptibles par le corps humain selon la revendication 5, **caractérisé en ce que** le rotor (1) comprend un aimant annulaire aimanté radialement présentant deux pôles magnétiques formés chacun par un aimant semi-annulaire (4, 5) s'étendant sur environ 180°.

8. Dispositif pour générer des vibrations perceptibles par le corps humain selon la revendication 5, 6 ou 7, **caractérisé en ce que** l'aimant annulaire est entouré par une culasse ferromagnétique annulaire (6) présentant une hauteur inférieure à la hauteur de l'aimant (4, 5), le moyen de détection de la position du rotor (1) étant placé dans l'espace annulaire camplémentaire (7).

9. Dispositif pour générer des vibrations perceptibles par le corps humain selon l'une quelconque des revendications précédentes, **caractérisé en ce que** le stator (2) est formé par une pièce ferromagnétique de forme sensiblement discale, présentant un guide tubulaire pour le passage de l'arbre de rotation du rotor, ladite pièce présentant au moins une lumière pour le passage des bobines électriques.

10. Dispositif pour générer des vibrations perceptibles par le corps humain selon la revendication 9, **caractérisé en ce que** ladite pièce statorique présente deux lumières s'ouvrant chacun par une fente périphérique, pour délimiter une zone centrale entourant le guide tubulaire, destinée à recevoir deux bobines électriques.

11. Dispositif pour générer des vibrations perceptibles par le corps humain selon la revendication 9, **caractérisé en ce que** ladite pièce statorique présente une lumière centrale fermée pour recevoir un noyau autour duquel sont bobinées deux bobines électriques.

12. Dispositif pour générer des vibrations perceptibles par le corps humain selon l'une quelconque des revendications précédentes, **caractérisé en ce que** le rotor (1) est positionné axialement par sustentation magnétique.

## Patentansprüche

1. Vorrichtung zum Erzeugen von Vibrationen, die vom menschlichen Körper wahrnehmbar sind, insbesondere ein Summer für Handys oder tragbare Telekommunikationsausrüstung, mit einem einphasigen Motor ohne Bürste, der einen Rotor (1) aufweist, der über mindestens einen magnetischen Pol verfügt, und einen Stator (2), der mindestens zwei Pole aufweist, die von mindestens einer elektrischen Spule (16, 17) abwechselnd versorgt werden, **dadurch gekennzeichnet, dass** die genannte Spule durch ein Mittel zur Erkennung der Position des Rotors gesteuert wird und **dadurch gekennzeichnet, dass** die genannte Vorrichtung ein drehendes Organ aufweist, das über eine Unwucht verfügt, wobei das genannte drehende Organ mit Unwucht vom einphasigen Motor ohne Bürste angetrieben wird.

2. Vorrichtung zum Erzeugen von Vibrationen, die vom menschlichen Körper wahrnehmbar sind, nach Anspruch 1, **dadurch gekennzeichnet, dass** das Mittel zur Erkennung der Position des Rotors (1) eine Hall-Sonde (20) ist.

3. Vorrichtung zum Erzeugen von Vibrationen, die vom menschlichen Körper wahrnehmbar sind, nach Anspruch 1, **dadurch gekennzeichnet, dass** das Mittel zur Erkennung der Position des Rotors (1) ein Detektor der induzierten Spannung in einer elektrischen Spule (16, 17) vom Stator ist.

4. Vorrichtung zum Erzeugen von Vibrationen, die vom menschlichen Körper wahrnehmbar sind, nach Anspruch 1, **dadurch gekennzeichnet, dass** das Mittel zur Erkennung der Position des Rotors (1) ein optischer Detektor ist.

5. Vorrichtung zum Erzeugen von Vibrationen, die vom menschlichen Körper wahrnehmbar sind, nach einem der vorhergehenden Ansprüche, **dadurch gekennzeichnet, dass** der Rotor (1) einen ringförmigen Magnet, der radial magnetisiert ist, umfasst.

6. Vorrichtung zum Erzeugen von Vibrationen, die vom menschlichen Körper wahrnehmbar sind, nach Anspruch 5, **dadurch gekennzeichnet, dass** der Rotor (1) einen ringförmigen Magnet, der sich über mindestens 270° erstreckt, umfasst.

7. Vorrichtung zum Erzeugen von Vibrationen, die vom menschlichen Körper wahrnehmbar sind, nach Anspruch 5, **dadurch gekennzeichnet, dass** der Rotor (1) einen ringförmigen Magnet (4, 5), der radial magnetisiert ist, umfasst, der zwei magnetische Pole aufweist, die jeweils durch einen halb ringförmigen Magnet (4, 5), der sich über etwa 180° erstreckt, gebildet werden.

8. Vorrichtung zum Erzeugen von Vibrationen, die vom menschlichen Körper wahrnehmbar sind, nach Anspruch 5, 6 oder 7, **dadurch gekennzeichnet, dass** der ringförmige Magnet von einem ferromagnetischem ringförmigen Joch (6) umgeben ist, das eine Höhe aufweist, die niedriger als die Höhe vom Magnet (4, 5) ist, wobei das Mittel zur Erkennung der Position des Rotors (1) im zusätzlichen ringförmigen Raum (7) untergebracht ist.

9. Vorrichtung zum Erzeugen von Vibrationen, die vom menschlichen Körper wahrnehmbar sind, nach einem der vorhergehenden Ansprüche, **dadurch gekennzeichnet, dass** der Stator (2) durch ein ferromagnetisches Teil mit leicht diskaler Form geformt ist, das eine röhrenförmige Führung für die Durchführung der Drehwelle vom Rotor aufweist, wobei das genannte Teil mindestens eine Öffnung für die Durchführung der elektrischen Spulen aufweist.

10. Vorrichtung zum Erzeugen von Vibrationen, die vom menschlichen Körper wahrnehmbar sind, nach Anspruch 9, **dadurch gekennzeichnet, dass** das genannte statorische Teil zwei Öffnungen aufweist, die sich jeweils durch einen peripheren Schlitz öffnen, um einen zentrale Zone abzugrenzen, die die röhrenförmige Führung umgibt, und die dazu dient, zwei elektrische Spulen aufzunehmen.

11. Vorrichtung zum Erzeugen von Vibrationen, die vom menschlichen Körper wahrnehmbar sind, nach Anspruch 9, **dadurch gekennzeichnet, dass** das genannte statorische Teil eine geschlossene zentrale Öffnung aufweist, um einen Kern aufzunehmen, um den herum zwei elektrische Spulen gespult sind.

12. Vorrichtung zum Erzeugen von Vibrationen, die vom menschlichen Körper wahrnehmbar sind, nach einem der vorhergehenden Ansprüche, **dadurch gekennzeichnet, dass** der Rotor (1) axial durch magnetisches Schweben positioniert ist.

## Claims

1. Device for generating vibrations sensed by a human body, notably a vibrator of a mobile phone or mobile telecommunications equipment, comprising a one-phase motor without a brush comprising a rotor (1) bearing at least one magnetic pole, and a stator (2) bearing at least two poles fed alternately by at least one electric bobbin (16, 17), **characterised in that** said bobbin is controlled by a means for detecting the position of the rotor and **in that** said device comprises a rotating element bearing an unbalance, said unbalanced rotating element being driven by the one-phase, brusheless motor.

2. Device for generating vibrations sensed by a human body according to claim 1, **characterised in that** the means for detecting the position of the rotor (1) is a Hall probe (20).

3. Device for generating vibrations sensed by a human body according to claim 1, **characterised in that** the means for detecting the position of the rotor (1) is a potential detector induced into an electric bobbin (16, 17) of the stator.

4. Device for generating vibrations sensed by a human body according to claim 1, **characterised in that** the means for detecting the position of the rotor (1) is a light-sensitive detector.

5. Device for generating vibrations sensed by a human body according to any of the previous claims, **characterised in that** the rotor (1) comprises (a radially magnetic ring magnet (4, 5)).

6. Device for generating vibrations sensed by a human body according to claim 5, **characterised in that** the rotor (1) comprises a ring magnet extending over less than 270°.

7. Device for generating vibrations sensed by a human body according to claim 5, **characterised in that** the rotor (1) comprises a radially magnetic ring magnet bearing two magnetic poles each created by a semi-annular magnet (4, 5) extending over about 180°.

8. Device for generating vibrations sensed by a human body according to claim 5, 6 or 7, **characterised in that** the ring magnet is surrounded by an annular ferromagnetic frame yoke (6) with a height less than the height of the magnet (4, 5), the means for detecting the position of the rotor (1) being placed in the complementary annular space (7).

9. Device for generating vibrations sensed by a human body according to any of the previous claims, **characterised in that** the stator (2) is made of a substantially disc-shaped ferromagnetic part, bearing a tubular guide for the insertion of the rotating shaft of the rotor, said part bearing at least one hole for the insertion of the electric bobbins.

10. Device for generating vibrations sensed by a human body according to claim 9, **characterised in that** said stator part has two holes each opening through a peripheral slot, in order to delimit a central zone surrounding the tubular guide intended to house two electric bobbins.

11. Device for generating vibrations sensed by a human body according to claim 9, **characterised in that** said stator part has one closed, central hole to house a core around which two electric bobbins are wound.

12. Device for generating vibrations sensed by a human body according to any of the previous claims, **characterised in that** the rotor (1) is axially positioned via magnetic support.
